# EUROPEAN PATENT SPECIFICATION

(11) **EP 2 606 097 B1**
(45) Date of publication and mention of the grant of the patent: **19.11.2014**
(21) Application number: 11751733.4
(22) Date of filing: 16.08.2011
(51) Int. Cl.: C09J 7/02, C09J 191/00, C09F 7/00, C09J 163/00

(54) **PRESSURE SENSITIVE ADHESIVES BASED ON RENEWABLE RESOURCES AND RELATED METHODS**
HAFTKLEBER AUF DER BASIS VON ERNEUERBAREN RESSOURCEN UND ZUGEHÖRIGE VERFAHREN
ADHÉSIFS AUTOCOLLANTS À BASE DE RESSOURCES RENOUVELABLES ET PROCÉDÉS APPARENTÉS

(30) Priority: 18.08.2010 US 374743 P
(43) Date of publication of application: 26.06.2013
(73) Proprietor: Avery Dennison Corporation, Pasadena, CA 91103 (US)
(72) Inventor: KOCH, Carol, A., San Gabriel, CA 91775 (US); MALLYA, Prakash, Sierra Madre, CA 91024 (US); WILLIAMS, Charles, R., Lock Haven, PA 17745 (US)
(74) Representative: Müller-Boré & Partner Patentanwälte PartG mbB
(86) International application number: PCT/US2011/047930
(87) International publication number: WO 2012/024301

(56) References cited:
- WO-A2-2008/144703
- GB-A- 1 279 939
- US-A1- 2002 188 056

## Description

The present invention relates generally to the field of pressure sensitive adhesives (PSAs). More specifically, the invention relates to pressure sensitive adhesives that are formed from renewable resources, for example bio-based materials, and methods for forming the pressure sensitive adhesives.

At present, nearly all known pressure sensitive adhesives are predominately made from monomers based on petroleum products. With the increasing cost and limited supply of oil, the use of renewable resources as raw material components for such adhesives has become economically attractive and socially responsible. The limited production capacity of acrylic monomers used in acrylic pressure sensitive adhesives is another driving force for investigating alternate sources. Furthermore, a performance advantage of bio-based pressure sensitive adhesives could include biodegradability, which supports the environmental friendliness of these adhesives. The present invention addresses these needs.

WO 2008/144703 discloses a method for forming a pressure sensitive adhesive including providing a substance that is an epoxidized triglyceride or an epoxidized fatty ester, and polymerizing the substance. A pressure sensitive adhesive can be formed by copolymerizing at least two substances that can be an epoxidized triglyceride, epoxidized fatty ester, or (meth)acrylic copolymer. In yet another method, the at least two substances can be an acrylated epoxidized triglyceride, acrylic copolymer, fatty acid based monomer produced by the reaction of an acid group of a fatty acid and an epoxy group of glycidylmethacrylate, or (meth)acrylic monomer.

The difficulties and drawbacks associated with previously known pressure sensitive adhesives and their production are addressed in the present inventive adhesives and methods.

In one aspect, the invention provides methods of forming pressure sensitive adhesives. The methods comprise providing an epoxidized naturally occurring oil or fat and reacting such with at least one multifunctional agent selected from the group consisting of alcohols, amines, amino alcohols, and combinations thereof.

Particularly, the present invention provides methods of forming a pressure sensitive adhesive by providing an effective amount of bio-based glycerol esters. The glycerol esters include a majority proportion of C₈ to C₂₂ fatty acids. The methods also comprise incorporating epoxide functionality into at least a majority proportion of the glycerol esters, to thereby produce an epoxidized glycerol ester intermediate. And, the methods comprise reacting the epoxidized glycerol ester intermediate with at least one multifunctional agent selected from the group consisting of (i) alcohols, (ii) amines, (iii) amino alcohols, and (iv) combinations thereof, to thereby form a pressure sensitive adhesive. The invention also provides pressure sensitive adhesives formed by these methods,

In various preferred embodiments of the invention, pressure sensitive adhesives are produced from one or more naturally occurring fats and/or oils. The natural fats or oils are epoxidized and then reacted with one or more alcohols, amines, amino alcohols, or combinations thereof to produce the pressure sensitive adhesives. In preferred embodiments of the invention, pressure sensitive adhesives are produced from biologically based or bio-based glycerol esters. As will be appreciated, glycerol esters include monoglycerides, diglycerides, triglycerides, and combinations thereof. The bio-based glycerol esters are epoxidized and reacted with one or more alcohols, amines, amino alcohols, or combinations thereof to produce the pressure sensitive adhesives. These and other aspects are described herein as follows.

The terms "naturally occurring" or "natural" fats and/or oils as used herein generally refer to fats or oils that are obtained from plants or animals as opposed to such materials obtained from petroleum or other fossil fuels. Thus, the terms "naturally occurring" or "natural" exclude oils or other materials that are obtained either directly or indirectly from petroleum sources or fossil fuel sources. As will be appreciated, examples of fossil fuels include coal, petroleum based oil, and gas. The natural fats and/or oils referred to herein include fats and/or oils that are obtained from plants or animals and also to such fats and/or oils which have been subjected to various purification, processing, or chemical reactions.

The term "bio-based" when used in association with glycerol esters, monoglycerides, diglycerides, triglycerides, and combinations thereof, refers to such agents that are obtained from naturally occurring fats and/or oils.

Natural fats and oils comprise triglycerides which are esters that include three fatty acids bound to a glycerol molecule. Examples of natural fats and oils from plant or animal sources include, but are not limited to, soybean oil, palm oil, olive oil, corn oil, canola oil, linseed oil, rapeseed oil, castor oil, coconut oil, cottonseed oil, palm kernel oil, rice bran oil, safflower oil, sesame oil, sunflower oil, tall oil, lard, tallow, fish oil, and combinations thereof. Typically, the fatty acids associated with natural fats and oils include long chain, e.g. C₈ to C₂₂ and more typically C₁₂ to C₁₄, moieties, many of which include multiple double bonds per chain. The glycerol molecule has three hydroxyl (OH-) groups. Each fatty acid has a carboxyl group (COOH-). In triglycerides, the hydroxyl groups of the glycerol join the carboxyl groups of the fatty acids to form ester bonds.

As noted, chain lengths of the fatty acids in naturally occurring or bio-based triglycerides can be of varying lengths. However, chain lengths having 16, 18, and 20 carbons are the most common. Natural fatty acids found in plants and animals are typically composed only of even numbers of carbon atoms as a result of how they are bio-synthesized from acetyl coenzyme A. Certain bacteria, however, possess the ability to synthesize odd- and branched-chain fatty acids. As a result, ruminant animal fat frequently contains odd-numbered fatty acids, such as 15, due to the action of bacteria in the rumen.

Most natural fats contain a complex mixture of individual triglycerides. Because of this, most natural fats melt over a broad range of temperatures. Cocoa butter is unusual in that it is composed of only a few triglycerides, one of which contains palmitic, oleic, and stearic acids, in order of concentration. As a result, cocoa butter has a relatively narrow melting temperature range.

Preferred fatty acids in the triglycerides of the natural fats and oils of interest are set forth below in Table 1.

**Table 1 - Chemical Names and Descriptions of Common Fatty Acids**

| Common Name | Carbon Atoms | Double Bonds | Scientific Name | Sources |
|---|---|---|---|---|
| Butyric acid | 4 | 0 | butanoic acid | butterfat |
| Caproic Acid | 6 | 0 | hexanoic acid | butterfat |
| Caprylic Acid | 8 | 0 | octanoic acid | coconut oil |
| Capric Acid | 10 | 0 | decanoic acid | coconut oil |
| Lauric Acid | 12 | 0 | dodecanoic acid | coconut oil |
| Myristic Acid | 14 | 0 | tetradecanoic acid | palm kernel oil |
| Myristoleic | 14 | 1 | 9-tetradecenoic acid | |
| Palmitic Acid | 16 | 0 | hexadecanoic acid | palm oil |
| Palmitoleic Acid | 16 | 1 | 9-hexadecenoic acid | animal fats |
| Margaric | 17 | 0 | heptadecanoic acid | |
| Margaroleic | 17 | 1 | | |
| Stearic Acid | 18 | 0 | octadecanoic acid | animal fats |
| Oleic Acid | 18 | 1 | 9-octadecenoic acid | olive oil |
| Ricinoleic acid | 18 | 1 | 12-hydroxy-9-octadecenoic acid | castor oil |
| Vaccenic Acid | 18 | 1 | 11-octadecenoic acid | butterfat |
| Linoleic Acid | 18 | 2 | 9,12-octadecadienoic acid | grape seed oil |
| Alpha-Linolenic Acid (ALA) | 18 | 3 | 9,12,15-octadecatrienoic acid | flaxseed (linseed) oil |
| Gamma-Linolenic Acid (GLA) | 18 | 3 | 6,9,12-octadecatrienoic acid | borage oil |
| Arachidic Acid | 20 | 0 i | eicosanoic acid | peanut oil, fish oil |
| Gadoleic Acid | 20 | 1 | 9-eicosenoic acid | fish oil |
| Arachidonic Acid (AA) | 20 | 4 | 5,8,11,14-eicosatetraenoic acid | liver fats |
| EPA | 20 | 5 | 5,8,11,14,17-eicosapentaenoic acid | fish oil |
| Behenic acid | 22 | 0 | docosanoic acid | rapeseed oil |
| Erucic acid | 22 | 1 | 13-docosenoic acid | rapeseed oil |
| DHA | 22 | 6 | 4,7,10,13,16,19-docosahexaenoic acid | fish oil |
| Lignoceric acid | 24 | 0 | tetracosanoic acid | small amounts in most fats |

Natural fats and oils contain varying amounts of triglycerides depending upon the type or source of the fat or oil, and the ratio of oil to fat. See Tables 1 and 2, and "The Chemistry of Oils and Fats" by Frank D. Gunstone (Blackwell Publishing 2004). Table 2 set forth below, lists typical fatty acid amounts (as percentages by weight) of various common oils and fats.

**Table 2 - Typical Fatty Acid Composition (wt%) of Common Oils and Fats**

| Oil/Fat | 16:0 | 16:1 | 18:0 | 18:1 | 18:2 | 18:3 | 20:1 | 22:1 | 24:0 | Average Unsaturation Per Triglyceride |
|---|---|---|---|---|---|---|---|---|---|---|
| soybean | 11 | 0.1 | 4 | 23.4 | 53.2 | 7.8 | | | | 4.6 |
| palm | 44.4 | 0.2 | 4.1 | 39.3 | 10 | 0.4 | | | | 1.8 |
| rapeseed | 3 | 0.2 | 1 | 13.2 | 13.2 | 9 | 9 | 49.2 | 1.2 | 3.8 |
| sunflower | 6 | | 5 | 20 | 60 | | | | | 1.4 |
| tallow | 27 | 11 | 7 | 48 | 2 | | | | | 0.6 |
| cottonseed | 21.6 | 0.6 | 2.6 | 18.6 | 54.5 | 0.7 | | | | 3.9 |
| olive | 13.7 | 1.2 | 2.5 | 71.1 | 10 | 0.6 | | | | 2.8 |
| corn | 10.9 | 0.2 | 2 | 25.4 | 59.6 | 1.2 | | | | 4.5 |
| canola | 4.1 | 0.3 | 1.8 | 60.9 | 21 | 8.8 | 1 | 0.7 | 0.2 | 3.9 |
| linseed | 5.5 | | 3.5 | 19.1 | 15.3 | 56.6 | | | | 6.6 |

The unsaturation associated with the various triglycerides in the oils and/or fats serves as a potential reaction site for polymerization and/or for reaction with one or more agents described herein. The double bonds are relatively unreactive in regards to polymerization unless conjugated as in drying oils such as Tung oil. But in one or more embodiments described herein, the double bonds are modified and polymerization occurs based on the modification.

In certain preferred embodiments of the invention, one or more particular classes of bio-based glycerol esters are used in forming the pressure sensitive adhesives. For example, glycerol esters include monoglycerides, diglycerides, triglycerides, and combinations thereof. Preferably, the glycerol esters include a majority proportion of triglycerides, however, it will be appreciated that the invention includes the use of monoglycerides, diglycerides, and other components associated with the bio-based glycerol esters. As will be appreciated, the monoglycerides and diglycerides typically contain many of the previously noted fatty acids described herein.

### Epoxidized Fats and Oils

The present invention is based upon reacting epoxidized naturally occurring fats or oils with one or more alcohols, amines, and/or amino alcohols as described in greater detail herein. More specifically, the reactions involve the bio-based glycerol esters, which preferably include triglycerides, of the naturally occurring fats or oils. The glycerol esters and preferably the triglycerides are epoxidized and then reacted with one or more alcohols, amines, and/or amino alcohols as described herein.

The epoxidized naturally occurring fats or oils can be formed in a variety of different techniques, or otherwise obtained. For example, the epoxidized oils can be commercially obtained. Epoxidized vegetable oils, such as soybean oil and linseed oil, are readily available from suppliers such as Cognis of Cincinnati, Ohio; Arkema Inc. (Arkema) of King of Prussia, Pennsylvania; and Cytec Industries (Cytec) of West Paterson, New Jersey. These materials are commonly used as plasticizers and stabilizers for polyvinylchloride polymers.

The epoxidized naturally occurring fats or oils can also be formed from natural fats or oils. One or more naturally occurring fats or oils are subjected to a reaction whereby epoxide functional groups are introduced into the triglycerides of the fats or oils. This occurs by epoxidation of the double bonds in the triglycerides. The epoxidized materials are then reacted with additional components as described herein.

In forming epoxidized fats and/or oils, or when reacting such with the additional components as described herein, epoxidized fatty acids and/or esters are also available and can be included in the reaction system. In certain embodiments, epoxy-containing oligomers or low molecular weight polymers can be included in the reaction system. The glass transition temperature, T_{g} and the crosslink density would be relatively low for the resulting polymer containing such components. Polymers formed from these materials could perform as a pressure sensitive adhesive. More specifically, mono-functional fatty acids and esters can be included in the reaction system used to make the pressure sensitive adhesives. For example, oleic acid or erucic acid can be used. In these embodiments, the following process can be used. The double bonds within the fatty acids or triglycerides can be epoxidized by reaction with peracids. These materials are then further reacted with one or more alcohols, amines, amino alcohols, or combinations thereof as described herein.

The epoxidized natural fats or oils, and optional fatty acids and esters, can be further functionalized using vinyl carboxylic acids such as acrylic acid and/or methacrylic acid to introduce acrylic functional groups. The acrylic or methacrylic group will react with additional acrylic comonomers by traditional free radical polymerization methods.

In other embodiments, fatty esters could be acrylated giving monofunctional materials that could be copolymerized with the epoxidized naturally occurring fats and oils to form pressure sensitive adhesives. For example, oleic acid is a major component in many vegetable and seed oils including soybean, olive, corn, palm, canola. Erucic acid is a longer chain mono-unsaturated fatty acid derived from rapeseed oil. The esters of these fatty acids, including methyl, butyl, and 2-ethylhexyl, would provide a formulator with the ability to tailor the T_{g} and modulus properties needed for many pressure sensitive adhesive formulations.

A palm oil based pressure sensitive adhesive can be formed from palm oil having the following composition:

| | |
|---|---|
| palmitic (16:0) | 44.4% |
| stearic (18:0) | 4% |
| oleic (18:1) | 39.3% |
| linoleic (18:2) | 10% |
| linolenic (18:3) | 0.4% |

This particular palm oil composition contains an average of 1.82 double bonds per triglyceride, and hence is able to incorporate higher levels while retaining a low modulus. The double bonds in palm oil can be epoxidized using peracids formed in situ, for example, by the reaction of hydrogen peroxide and formic acid. The epoxidized palm oil can be further modified by reaction with acrylic acid to form the acrylated epoxidized palm oil.

Additional examples of preferred materials with epoxide functionality can include epoxidized triglycerides such as epoxidized vegetable oils such as epoxidized soybean oil and epoxidized palm oil; monofunctional epoxy materials such as epoxidized fatty acids and epoxidized fatty esters; and epoxy resins from petroleum sources such as those based on diglycidyl ether adducts of resorcinol, bisphenol A, bisphenol F, butanediol, and polyethylene glycol. Additional aspects of these and other agents are described herein.

### Reacting Epoxidized Oil(s)

As noted, one or more epoxidized natural fats or oils are reacted with one or more of the following multifunctional components to form a pressure sensitive adhesive. The multifunctional components are selected from (i) alcohols, (ii) amines, (iii) amino alcohols, and combinations thereof. Each of these components is described in greater detail herein.

In addition to the use of one or more of these multifunctional components, one or more monofunctional alcohols, amines, amino alcohols, and combinations thereof may be used. Generally, a difunctional component is preferred for reacting with the epoxidized natural fats or oils in order to obtain a polymeric product having sufficient molecular weight to thereby serve as a suitable pressure sensitive adhesive. However, for certain applications it is contemplated that one or more monofunctional agents can be used to adjust the network density or other characteristics of the resulting polymeric products. Preferably, monofunctional agents if used, are one or more mono alcohols or mono amines or combinations thereof. And, if used, the monofunctional agent(s) are used in conjunction with the noted multifunctional agent(s). It is also contemplated that multiple monofunctional agents could be used, so long as they are used in combination with one or more multifunctional agents, such as during reacting with the epoxidized oils and fats.

### Alcohols

The epoxidized fats or oils can be reacted with one or more multifunctional alcohols to form the pressure sensitive adhesives of interest. Preferably, the alcohols are difunctional alcohols, i.e. diols. Various diols can be used for reacting with the epoxidized fats or oils. A diol, glycol, or dihydric alcohol is a chemical compound containing two hydroxyl groups. Table 3 lists several representative examples of diols that can be used in forming the various preferred pressure sensitive adhesives.

**Table 3 - Representative Dihydric Alcohols**

| Linearity of the diol | Hydroxyls on adjacent carbons (vicinal diols) | Hydroxyls on non-adjacent carbons |
|---|---|---|
| Linear | Ethylene glycol | 1,3-Propanediol, Propylene glycol, 1,4-Butanediol, |
| | | 1,5-Pentanediol, 1,8-Octanediol |
| Branched | 1,2-Propanediol, 1,2-Butanediol, 2,3-Butanediol | 1,3-Butanediol, 1,2-Pentanediol, Etohexadiol, p-Menthane-3,8-diol, 2-Methyl-2,4-Pentanediol |

As noted, in certain applications it may be desirable to include one or more monohydric alcohols in the reaction mixture. Table 4 set forth below, lists representative monohydric alcohols that can be used in forming the preferred embodiment pressure sensitive adhesives. It will be appreciated that one or more monohydric alcohols if used, are used in conjunction with a multifunctional component.

**Table 4 - Representative Monohydric Alcohols**

| Chemical Formula | IUPAC Name | Common Name |
|---|---|---|
| CH₃OH | Methanol | Wood alcohol |
| C₂H₅OH | Ethanol | Grain alcohol |
| C₄H₉OH | Butanol | Butyl alcohol |
| C₅H₁₁OH | Pentanol | Amyl alcohol |
| C₁₆H₃₃OH | Hexadecan-1-ol | Ceytl alcohol |
| C₃H₅OH | Prop-2-ene-1-ol | Allyl alcohol |

Examples of preferred alcohols can include monofunctional, difunctional and multifunctional alcohols such as methanol, propanol, isopropanol, butanol, hexanol, glycerol, propanediol, butanediol, hexanediol, polyethyleneglycol, tetraethyleneglycol, diethyleneglycol, 2-methylpropanediol, methylbutanediol, methylpentanediol, pentaerythritol, trimethylolpropane, sorbitol, fatty alcohols such as C₈ to C₁₈ fatty alcohols derived from triglycerides, and combinations thereof. It will be appreciated that in no way is the invention limited to the use of any of the alcohols noted herein. That is, nearly any alcohol having appropriate characteristics and suitability for reacting with the epoxidized naturally occurring fats or oils can be used in forming the preferred embodiment pressure sensitive adhesives.

The difunctional or multifunctional alcohol can be polymeric with hydroxyl side groups or end groups, such as hydroxy terminated polybutadiene. The alcohol can be bio-based or derived from vegetable oils. Examples include castor oil with pendant hydroxyl groups, dimer diols formed from dimer acids, or biobased polyols formed from epoxidized oils, such as the Agrol products from Biobased Technologies, Renuva products from Dow, and BiOH products from Cargill.

Thus, one or more epoxidized naturally occurring fats or oils can be reacted with one or more dihydric alcohols or multifunctional alcohols, and combinations thereof to produce the preferred embodiment pressure sensitive adhesives. Monohydric alcohols may be used so long as they are used in combination with at least one of a dihydric alcohol, a multifunctional alcohol, or another difunctional or multifunctional component.

It is generally preferred that an excess of alcohol groups be provided relative to the epoxide groups. These amounts are referred to herein as effective amounts. For certain reaction systems, the molar ratio of epoxide groups to alcohol groups is about 1:1.1, respectively. However, it will be appreciated that the present invention includes the use of ratios greater than or less than this particular ratio.

### Amines

The epoxidized naturally occurring fats or oils can be reacted with one or more multifunctional amines to form the pressure sensitive adhesives of interest. Preferably, the amines are diamines. Amines are organic compounds and functional groups that contain a nitrogen atom. Amines are derivatives of ammonia, wherein one or more hydrogen atoms have been replaced by a substituent such as an alkyl or aryl group. Common amines include amino acids, biogenic amines, trimethylamine, and aniline. The amine can include a primary amine, secondary amine, and/or a tertiary amine.

As previously noted, it is preferred to use a multifunctional component to react with the epoxidized natural fat(s) and/or oil(s). In the event that the difunctional component is an amine, the amine is a diamine. So long as the reaction system includes one or more multifunctional amines and preferably one or more difunctional amines, it is contemplated that a mono amine could also be used.

The amines are preferably in the form of a diamine. Examples of diamines include, but are not limited to hydrazine, diamines with an aliphatic linear carbon chain such as ethylene diamine (1,2-diaminoethane), 1,3-diaminopropane (propane-1,3-diamine), putrescine (butane-1,4-diamine), cadaverine (pentane-1,5-diamine), and hexamethylenediamine (hexane-1,6-diamine). Additional examples of diamines include, but are not limited to diamines with an aromatic carbon chain such as with one aromatic cycle. These include phenylenediamines such as o-phenylenediamine or OPD, m-phenylenediamine or MPD, or p-phenylenediamine or PPD; xylylenediamines such as o-xylylenediamine or OXD, m-xylylenediamine or MXD, or p-xylylenediamine or PXD; and dimethyl-4-phenylenediamine; and N,N'-di-2-butyl-1,4-phenylenediamine. Diamines with two aromatic cycles include diphenylethylenediamine and 1,8-diaminophthalene. It will be understood that the invention includes the use of nearly any amine having appropriate characteristics and suitability for reacting with the epoxidized naturally occurring fats or oils.

Thus, one or more epoxidized naturally occurring fats or oils can be reacted with one or more diamines or other like amines, and combinations thereof to produce the preferred embodiment pressure sensitive adhesives. And, so long as one or more multifunctional agents are used in the reaction, one or more mono amines may be used.

It is generally preferred that an excess of amine groups be provided relative to the epoxide groups. Most preferably, the molar ratio of epoxide groups to amine groups is about 1:1.1, respectively. These amounts are referred to herein as effective amounts.

### Amino Alcohols

Amino alcohols are organic compounds that contain both an amine functional group and an alcohol functional group. Common amino alcohols include, but are not limited to, ethanolamines, propanolamines, butanolamines, pentanolamines, heptanolamines, hexanolamines, amines based on cresol and phenol, and combinations thereof. The present invention includes the use of nearly any amino alcohol in reacting with the epoxidized naturally occurring fats or oils. That is, so long as the amino alcohol has appropriate characteristics and is suitable for the reaction, it is a potential reaction candidate. By definition, an amino alcohol is a difunctional (or multifunctional) agent.

Table 5 set forth below lists representative preferred amino alcohols for use in the methods of the invention.

**Table 5 - Representative Amino Alcohols**

| Name or Description |
|---|
| 2-Amino-2-ethyl-1,3-propanediol |
| 2-amino-2-ethyl-1,3-propanediol |
| 2-Amino-2-methyl-1-propanol |
| 2-amino-1-methyl-1,3-propanediol |
| 2-amino-2-methyl-1-propanol solution |
| 80% 2-Dimethylamino-2-Methyl-1-Propanol |
| Tris (hydroxymethyl) aminomethane |
| Tris (hydroxymethyl) aminomethane |
| 2-Amino-2-Methyl-1-Propanol |
| 2-amino-1-methyl-1,3-propanediol |
| Tris (hydroxymethyl) aminomethane |

Thus, one or more epoxidized naturally occurring fats or oils can be reacted with one or more amino alcohols to produce the preferred embodiment pressure sensitive adhesives.

As previously described in association with alcohols and amines, it is generally preferred that when utilizing agents containing both functional groups in combination, that an excess of the total alcohol and amine groups be provided relative to the epoxide groups. A preferred ratio of epoxide groups to the total alcohol and amine groups is about 1:1.1, respectively.

### Other Additives

As previously noted, in addition to one or more of the previously noted multifunctional alcohols, amines, and/or amino alcohols, various epoxidized naturally occurring fatty esters or epoxidized fatty acids can be included in the reaction with the epoxidized fats or oils to regulate the network density.

It is also contemplated that one or more acrylated species could be included in the reaction. Non-limiting examples of acrylated species include acrylic acid, hydroxethyl acrylate, and the like. The use of an acrylate component incorporates acrylate double bonds which can alter or modify curing properties of the resulting pressure sensitive adhesive such as when curing under UV radiation and/or by the use of photoinitiators.

Additional additives can be added such as fillers, bio-based tackifiers or plasticizers which can also be added to further modify the properties of the resulting pressure sensitive adhesive.

Additional agents containing functional groups such as sulfonic acids, sulfates, phosphates, and the like can also be used to incorporate such functional groups into the resulting polymeric network. Appropriate selection of agents as co-reactants can be undertaken.

Materials containing either the epoxy group or the hydroxyl group can also be used to incorporate an additional type of functionality. The following materials can be used for this purpose: hydroxyethylacrylate, hydroxylethylmethacrylate, hydroxypropylacrylate, hydroxypropylmethacrylate, hydroxybutylacrylate, hydroxybutylmethacrylate, glycidylmethacrylate, and combinations thereof.

One or more solvents can also be added to the reactants, the reactant mixture, and/or to the resulting polymeric products to adjust the reaction characteristics or the viscosity of the resulting pressure sensitive adhesives. A wide array of solvents can be used such as water or oil based solvents. Preferred oil based solvents include, but are not limited to heptane or toluene.

In addition, one or more surfactants can also be included in the reaction system. For example, surfactants may be desirable when using emulsion or suspension type polymerization techniques.

Although the use of fossil-based components is generally not preferred, it will be understood that the present invention includes the use of such components in order to obtain certain desired properties or characteristics in the resulting network. For example, the invention includes combining the pressure sensitive adhesives described herein which are formed from renewable resources, i.e. natural fats and/or oils, with one or more components that are obtained or produced from nonrenewable resources such as fossil fuel derived polymers or components. In this regard, pressure sensitive adhesives formed from natural fats and/or oils as described herein can optionally be combined with polymers obtained from nonrenewable resources that contain acrylic or epoxide functionality or other pendant groups to selectively adjust or control the properties of the resulting material. An example of such property is crosslink density. Techniques based upon this strategy enable a formulator to specifically tailor and/or adjust the properties and performance characteristics of the end product material. This technique enables particular "balancing" of properties of the resulting material. In such applications, it is contemplated that preferably, the proportion of material originating from renewable resources is at least 50% and preferably at least 75%. However, the invention includes polymeric materials containing a minority proportion of material originating from renewable resources and a majority proportion of material originating from nonrenewable resources.

### Reaction Methods

The reaction between one or more epoxidized natural oils and/or fats, and more specifically between the bio-based glycerol esters and triglycerides therein, and one or more (i) alcohols, (ii) amines, (iii) amino alcohols, or their combination is preferably performed at elevated temperatures and optionally with catalyst(s) to increase the speed of the reaction. Again, it will be appreciated that although the description herein is generally provided in terms of reacting epoxidized triglycerides obtained from bio-based oils and/or fats, the invention also includes the use of monoglycerides, diglycerides, and various combinations thereof.

Preferably, the reaction is performed in a reactor and at conditions in order to achieve a conversion high enough to obtain a coatable syrup. In certain embodiments, the flowable, relatively viscous material is then deposited on a web or other member at sufficiently high temperatures in the presence of a catalyst to accelerate the conversion.

More specifically, the various preferred pressure sensitive adhesives can be formed using an array of polymerization techniques. For example, the reactions can proceed by several techniques such as, but not limited to bulk polymerization, solvent polymerization, water based polymerization, and web polymerization. It is also contemplated that combinations of these techniques could be employed. It is also contemplated that one or more of these techniques utilize photocatalytic cationic polymerization to achieve the desired polymeric product(s). UV polymerization is preferred is many applications. Thermal polymerization is preferred for the initial in-reactor phase of polymerization.

In a bulk polymerization method, mass polymerization is performed by adding one or more soluble initiators to the epoxidized natural fats or oils in a liquid state.

For certain applications and/or polymerization techniques, it may be preferred that with respect to all of the reactants and agents other than the epoxidized fats or oils, that the multifunctional component(s) constitute the majority. As previously noted, one or more monofunctional agents can be added to control or otherwise adjust the crosslink density. However, if an excess of multifunctional components are used in solvent-based polymerization at high concentrations, then gelation could occur, resulting in insoluble materials that are not easily coatable and generally not suitable for pressure sensitive adhesives. And so, for certain other applications, it may be preferred that the multifunctional components constitute a minority proportion. The particular proportions utilized for the multifunctional components and other components used in the reaction systems depends upon an array of factors including but not limited to the number of functional groups and the molecular weight of the constituents.

In forming the preferred embodiment pressure sensitive adhesives by water based polymerization, an emulsion or suspension is formed, typically of oil droplets in a continuous phase of water. Polymerization occurs within the oil droplets. When using emulsion or suspension polymerization techniques, it may be preferred to utilize surfactants and/or steric stabilizers to promote formation of the preferred embodiment pressure sensitive adhesives.

The preferred pressure sensitive adhesives can also be formed using web polymerization strategies. In this approach, a relatively viscous reaction mixture is initially formed and then deposited on a web or other member and the reaction allowed or otherwise promoted to proceed to thereby produce the desired pressure sensitive adhesive.

The particular catalyst selected depends upon the particular polymerization technique and the desired properties of the resulting polymers. An example of a preferred catalyst suitable for a wide array of polymerizations is para-toluene sulfonic acid (PTSA).

In many applications, it is particularly preferred to only partially polymerize the reaction mixture and then to transfer the intermediate material to a web, line, or other receiving surface. Once appropriately deposited or otherwise applied to a surface or component of interest, the material is subjected to further polymerization to obtain the desired pressure sensitive adhesive. For example, a reaction mixture may be partially reacted to form a flowable material having a viscosity that is appropriate for applying the material as a coating on a web. Partial polymerization can be performed by appropriate exposure to heat and/or radiation. After desired administration of the material on the web, further polymerization is performed such as by exposure to heat and/or radiation. Thus, the invention includes combinations of operations such as an initial polymerization of components in a vessel to obtain a desired viscosity of the system, followed by application of the intermediate partially polymerized product onto a surface of interest, followed by further polymerization of the product while on the surface of interest.

The pressure sensitive adhesives according to the invention can be used as removable or permanent adhesives on paper or film facestocks in a variety of applications ranging from general purpose labels, office product labels, industrial tapes, and medical applications.

### Representative Examples

The following are representative hypothetical examples providing guidance in forming the preferred embodiment pressure sensitive adhesives.

### Example 1

An epoxidized naturally occurring oil is combined with effective amounts of monohydric and dihydric alcohols. The reactants are subjected to hot melt synthesis followed by heat curing to produce a preferred embodiment pressure sensitive adhesive.

Specifically, epoxidized soybean oil, propylene glycol and butanol are combined in a reaction vessel or other component. Para-toluene sulfonic acid (PTSA) can be used as a catalyst. The molar ratio of epoxide groups to alcohol groups is preferably about 1:1.1, respectively. The reactants are heated in a reactor without solvents and then applied to a siliconized sheet. A 2 mil polyester sheet is positioned on the reactant layer and the reaction allowed to continue until the reactants are completely reacted.

### Example 2

An epoxidized oil with an epoxidized fatty ester or acid is reacted with dihydric and monohydric alcohols via hot melt synthesis followed by heat curing, as previously described in Example 1.

Specifically, epoxidized soybean oil and epoxidized linoleic acid ester (or linoleic acid) are combined with propylene glycol and butanol. The previously noted PTSA can be used as a catalyst.

### Example 3

A mixture of epoxidized oils can be reacted with one or more diols and/or monohydric alcohols, subjected to hot melt synthesis, and followed by heat curing to form a preferred embodiment pressure sensitive adhesive.

Specifically, epoxidized soybean oil and epoxidized olive oil are reacted with propylene glycol and butanol as previously described in Example 1. PTSA can be used as a catalyst.

### Example 4

A mixture of epoxidized oil, a dihydric alcohol, a monohydric alcohol, and an acrylate can be prepared to form a reaction mixture. Hot melt synthesis followed by exposure to UV radiation via web curing can be employed to form the preferred embodiment pressure sensitive adhesives.

For example, epoxidized soybean oil can be combined and reacted with propylene glycol, butanol, and hydroxyethyl acrylate using PTSA as a catalyst, to form a preferred pressure sensitive adhesive. The reactants are heated in a reactor without solvents. A photoinitiator is added and optionally multifunctional acrylate, and the resulting mixture coated on a liner. The coating is covered with a 2 mil polyethylene film and cured by exposure to UV.

### Example 5

Any of the previously noted Examples 1-4 can be performed using bio-based alcohols such as bio-based dihydric alcohols and/or bio-based monohydric alcohols.

### Example 6

An epoxidized oil is combined and reacted with an amino alcohol and a monohydric alcohol and subjected to hot melt synthesis and heat curing.

For example, an epoxidized soybean oil, 1-amino-2-propanol, and butanol are combined and reacted as described in Example 1.

### Example 7

Any of the previously described Examples 1-6 can be synthesized with fillers such as hydrophobically or hydrophilic silicas, tackifiers such as hydrogenated rosin esters, and plasticizers to regulate Tg, cohesive, and adhesive properties

### Example 8

Any of the previously described Examples 1-6 can optionally be synthesized with compounds to introduce sulfonic acid groups, phosphate ester groups etc. to regulate the adhesion properties.

### Example 9

Example 1 can be carried out in the presence of a suitable solvent such as heptane or toluene to regulate the viscosity.

### Example 10

Example 1 can be carried out in the presence of a surfactant or a mixture of surfactants and water to make a water based emulsion of the adhesive.

### Example 11

Example 1, with the proper steric stabilizer and relatively low levels of one or more suitable surfactants and water, can be prepared in the form of a suspension of micron sized beads of the preferred pressure sensitive adhesive.

Many other benefits will no doubt become apparent from future application and development of this technology.

Additional details pertaining to pressure sensitive adhesives formed from renewable resources are set forth in WO 2008/144703.

It will be understood that any one or more feature or component of one embodiment described herein can be combined with one or more other features or components of another embodiment. Thus, the present invention includes any and all combinations of components or features of the embodiments described herein.

## Claims

1. A method of forming a pressure sensitive adhesive, the method comprising:
providing an epoxidized naturally occurring oil or fat;
reacting the epoxidized naturally occurring oil or fat with at least one multifunctional agent selected from the group consisting of (i) alcohols, (ii) amines, (iii) amino alcohols, and (iv) combinations thereof, to thereby form a pressure sensitive adhesive.

2. The method of claim 1, wherein said providing an epoxidized naturally occurring oil or fat is achieved by
providing an effective amount of bio-based glycerol esters, the glycerol esters including a majority proportion of C₈ to C₂₂ fatty acids; and
incorporating epoxide functionality into at least a majority proportion of the glycerol esters, to thereby produce an epoxidized glycerol ester intermediate; and
wherein the epoxidized glycerol ester intermediate is reacted with said at least one multifunctional agent.

3. The method of claim 2, wherein the glycerol esters include at least one of (i) monoglycerides, (ii) diglycerides, (iii) triglycerides, and (iv) combinations thereof.

4. The method of claim 2 or 3, wherein the glycerol esters include a majority proportion of triglycerides.

5. The method of any one of claims 1 to 4, wherein the naturally occurring oil or fat is selected from the group consisting of soybean oil, palm oil, olive oil, corn oil, canola oil, linseed oil, rapeseed oil, castor oil, coconut oil, cottonseed oil, palm kernel oil, rice bran oil, safflower oil, sesame oil, sunflower oil, tall oil, lard, tallow, fish oil, and combinations thereof.

6. The method of any one of claims 1 to 5, wherein alcohols are selected and wherein the alcohols are dihydric alcohols.

7. The method of any one of claims 1 to 5, wherein amines are selected and wherein the amines are diamines.

8. The method of any one of claims 1 to 5, wherein amino alcohols are selected and wherein the amino alcohols are selected from the group consisting of ethanolamines, propanolamines, butanolamines, pentanolamines, heptanolamines, hexanolamines, amines based on cresol and phenol, and combinations thereof.

9. The method of any one of claims 1 to 8, wherein reacting is performed by a technique selected from the group consisting of (i) bulk polymerization, (ii) solvent polymerization, (iii) water based polymerization, (iv) web polymerization, and (v) combinations thereof.

10. The method of any one of claims 1 to 9, further comprising:
providing an epoxidized fatty acid and including the epoxidized fatty acid in the reacting step, and/or
providing an epoxidized fatty ester and including the epoxidized fatty ester in the reacting step, and/or
providing an acrylate component and including the acrylate component in the reacting step, and/or
providing a vinyl carboxylic acid and including the vinyl carboxylic acid in the reacting step.

11. The method of any one of claims 1 to 10, wherein the epoxidized naturally occurring oil or fat contains at least one acrylate group.

12. The method of any one of claims 1 to 11, further comprising:
providing an agent containing one or more functional groups selected from the group consisting of sulfonic acids, sulfates, phosphonates, and combinations thereof, and including the agent in the reacting step.

13. The method of any one of claims 1 to 12, further comprising:
providing a material selected from the group consisting of hydroxyethylacrylate, hydroxyethylmethacrylate, hydroxypropylacrylate, hydroxypropylmethacrylate, hydroxybutylacrylate, hydroxybutylmethacrylate, glycidylmethacrylate, and combinations thereof, and including the material in the reacting step.

14. The method of any one of claims 1 to 13, further comprising:
providing a component obtained from fossil fuels and including the component in the reacting step.

15. The pressure sensitive adhesive produced by any of the methods of any one of claims 1 to 14.

## Patentansprüche

1. Verfahren zum Bilden eines Haftklebers, wobei das Verfahren umfaßt:
das Bereitstellen eines epoxidierten natürlich vorkommenden Öls oder Fetts,
das Umsetzen des epoxidierten natürlich vorkommenden Öls oder Fetts mit mindestens einem mehrfunktionalen Mittel, ausgewählt aus der Gruppe, bestehend aus (i) Alkohol, (ii) Aminen, (iii) Aminoalkoholen und (iv) Kombinationen davon, um dadurch einen Haftkleber zu bilden.

2. Verfahren gemäß Anspruch 1, wobei das Bereitstellen eines epoxidierten natürlich vorkommenden Öls oder Fetts erreicht wird durch
das Bereitstellen einer wirksamen Menge von Glycerinestern auf Biobasis, wobei die Glycerinester einen Hauptanteil an C₈ bis C₂₂ Fettsäuren einschließen, und
das Einbringen von Epoxid-Funktionalität in mindestens einem Hauptanteil der Glycerinester, um dadurch ein epoxidiertes Glycerinester-Intermediat zu erzeugen, und
wobei das epoxidierte Glycerinester-Intermediat mit mindestens einem mehrfunktionalem Mittel umgesetzt wird.

3. Verfahren gemäß Anspruch 2, wobei die Glycerinester mindestens eines von (i) Monoglyceriden, (ii) Diglyceriden, (iii) Triglyceriden und (iv) Kombinationen davon einschließen.

4. Verfahren gemäß Anspruch 2 oder 3, wobei die Glycerinester einen Hauptanteil an Triglyceriden einschließen.

5. Verfahren gemäß einem der Ansprüche 1 bis 4, wobei das natürlich vorkommende Öl oder Fett aus der Gruppe, bestehend aus Sojabohnenöl, Palmöl, Olivenöl, Maisöl, Canolaöl, Leinsamenöl, Rapsöl, Rizinusöl, Kokosnußöl, Baumwollsamenöl, Palmkernöl, Reiskleienöl, Distelöl, Sesamöl, Sonnenblumenöl, Tallöl, Schmalz, Talk, Fischöl und Kombinationen davon, ausgewählt ist.

6. Verfahren gemäß einem der Ansprüche 1 bis 5, wobei Alkohole ausgewählt sind und wobei die Alkohole zweiwertige Alkohole sind.

7. Verfahren gemäß einem der Ansprüche 1 bis 5, wobei Amine ausgewählt sind und wobei die Amine Diamine sind.

8. Verfahren gemäß einem der Ansprüche 1 bis 5, wobei Aminoalkohole ausgewählt sind und wobei die Aminoalkohole aus der Gruppe, bestehend aus Ethanolaminen, Propanolaminen, Butanolaminen, Pentanolaminen, Heptanolaminen, Hexanolaminen, Aminen auf Basis von Kresol und Phenol und Kombinationen davon, ausgewählt sind.

9. Verfahren gemäß einem der Ansprüche 1 bis 8, wobei das Umsetzen durch eine Technik durchgeführt wird, ausgewählt aus der Gruppe, bestehend aus (i) Massepolymerisation, (ii) Lösungsmittelpolymerisation, (iii) Wasser-basierende Polymerisation, (iv) Bahn-Polymerisation und (v) Kombinationen davon.

10. Verfahren gemäß einem der Ansprüche 1 bis 9, weiter umfassend:
das Bereitstellen einer epoxidierten Fettsäure und Einbringen der epoxidierten Fettsäure in den Reaktionsschritt, und/oder
das Bereitstellen eines epoxidierten Fettesters und Einbringen des epoxidierten Fettesters in den Reaktionsschritt, und/oder
das Bereitstellen einer Acrylatkomponente und das Einbringen der Acrylatkomponente in den Reaktionsschritt, und/oder
das Bereitstellen einer Vinylcarbonsäure und das Einbringen der Vinylcarbonsäure in den Reaktionsschritt.

11. Verfahren gemäß einem der Ansprüche 1 bis 10, wobei das epoxidierte natürlich vorkommende Öl oder Fett mindestens eine Acrylatgruppe enthält.

12. Verfahren gemäß einem der Ansprüche 1 bis 11, weiter umfassend:
das Bereitstellen eines Mittels, enthaltend ein oder mehrere funktionale Gruppen, ausgewählt aus der Gruppe, bestehend aus Sulfonsäuren, Sulfaten,
Phosphonaten und Kombinationen davon, und Einbringen des Mittels in den Reaktionsschritt.

13. Verfahren gemäß einem der Ansprüche 1 bis 12, weiter umfassend:
das Bereitstellen eines Materials, ausgewählt aus der Gruppe, bestehend aus Hydroxyethylacrylat, Hydroxyethylmethacrylat, Hydroxypropylacrylat, Hydroxypropylmethacrylat, Hydroxybutylacrylat, Hydroxybutylmethacrylat, Glycidylmethacrylat und Kombinationen davon und Einbringen des Materials in den Reaktionsschritt.

14. Verfahren gemäß einem der Ansprüche 1 bis 13, weiter umfassend:
das Bereitstellen einer Komponente, erhalten aus fossilen Brennstoffen, und
das Einbringen der Komponente in den Reaktionsschritt.

15. Haftkleber, hergestellt durch jedwedes der Verfahren gemäß einem der Ansprüche 1 bis 14.

## Revendications

1. Procédé de formation d'un adhésif sensible à la pression, le procédé comprenant :
l'obtention d'une huile ou d'une graisse naturelle époxidée ;
la réaction de l'huile ou de la graisse naturelle époxidée avec au moins un agent multifonctionnel choisi dans le groupe constitué par (i) les alcools, (ii) les amines, (iii) les alcools aminés et (iv) leurs combinaisons, pour ainsi former un adhésif sensible à la pression.

2. Procédé selon la revendication 1, dans lequel ladite obtention d'une huile ou d'une graisse naturelle époxidée est réalisée par
l'obtention d'une quantité efficace d'esters de glycérol biosourcés, les esters de glycérol comprenant une proportion majoritaire d'acides gras en C₈ à C₂₂ ; et
l'incorporation d'une fonctionnalité époxyde dans au moins une proportion majoritaire des esters de glycérol, pour ainsi produire un intermédiaire d'ester de glycérol époxydé ; et
dans lequel l'intermédiaire d'ester de glycérol époxydé est mis à réagir avec ledit au moins un agent multifonctionnel.

3. Procédé selon la revendication 2, dans lequel les esters de glycérol comprennent au moins un composé choisi parmi (i) les monoglycérides, (ii) les diglycérides, (iii) les triglycérides et (iv) leurs combinaisons.

4. Procédé selon la revendication 2 ou 3, dans lequel les esters de glycérol comprennent une proportion majoritaire de triglycérides.

5. Procédé selon l'une quelconque des revendications 1 à 4, dans lequel l'huile ou la graisse naturelle est choisie dans le groupe constitué par l'huile de soja, l'huile de palme, l'huile d'olive, l'huile de maïs, l'huile de canola, l'huile de lin, l'huile de colza, l'huile de ricin, l'huile de noix de coco, l'huile de coton, l'huile de palmiste, l'huile de riz, l'huile de carthame, l'huile de sésame, l'huile de tournesol, l'huile de tall, le lard, le suif, l'huile de poisson et leurs combinaisons.

6. Procédé selon l'une quelconque des revendications 1 à 5, dans lequel les alcools sont choisis et dans lequel les alcools sont des alcools dihydriques.

7. Procédé selon l'une quelconque des revendications 1 à 5, dans lequel les amines sont choisies et dans lequel les amines sont des diamines.

8. Procédé selon l'une quelconque des revendications 1 à 5, dans lequel les alcools aminés sont choisis et dans lequel les alcools aminés sont choisis dans le groupe constitué par les éthanolamines, les propanolamines, les butanolamines, les pentanolamines, les heptanolamines, les hexanolamines, les amines basées sur le crésol et le phénol, et leurs combinaisons.

9. Procédé selon l'une quelconque des revendications 1 à 8, dans lequel la réaction est réalisée par une technique choisie dans le groupe constitué par (i) la polymérisation en masse, (ii) la polymérisation dans un solvant, (iii) la polymérisation en milieu aqueux, (iv) la polymérisation en réseau et (v) leurs combinaisons.

10. Procédé selon l'une quelconque des revendications 1 à 9, comprenant en outre :
l'obtention d'un acide gras époxydé et l'introduction de l'acide gras époxydé dans l'étape de réaction, et/ou
l'obtention d'un ester gras époxydé et l'introduction de l'ester gras époxydé dans l'étape de réaction, et/ou
l'obtention d'un composant acrylate et l'introduction du composant acrylate dans l'étape de réaction, et/ou
l'obtention d'un acide vinylcarboxylique et l'introduction de l'acide vinylcarboxylique dans l'étape de réaction.

11. Procédé selon l'une quelconque des revendications 1 à 10, dans lequel l'huile ou la graisse naturelle époxidée contient au moins un groupe acrylate.

12. Procédé selon l'une quelconque des revendications 1 à 11, comprenant en outre :
l'obtention d'un agent contenant un ou plusieurs groupes fonctionnels choisi dans le groupe constitué par les acides sulfoniques, les sulfates, les phosphonates et leurs combinaisons, et l'introduction de l'agent dans l'étape de réaction.

13. Procédé selon l'une quelconque des revendications 1 à 12, comprenant en outre :
l'obtention d'une substance choisie dans le groupe constitué par l'acrylate d'hydroxyéthyle, le méthacrylate d'hydroxyéthyle, l'acrylate d'hydroxypropyle, le méthacrylate d'hydroxypropyle, l'acrylate d'hydroxybutyle, le méthacrylate d'hydroxybutyle, le méthacrylate de glycidyle et leurs combinaisons, et l'introduction de la substance dans l'étape de réaction.

14. Procédé selon l'une quelconque des revendications 1 à 13, comprenant en outre :
l'obtention d'un composant obtenu à partir de combustibles fossiles et l'introduction du composant dans l'étape de réaction.

15. Adhésif sensible à la pression produit par l'un quelconque des procédés selon l'une quelconque des revendications 1 à 14.
